# EUROPEAN PATENT APPLICATION

(11) **EP 0 695 103 A1**
(43) Date of publication of application: **31.01.1996**
(21) Application number: 94305648.1
(22) Date of filing: 29.07.1994
(51) Int. Cl.: H04Q 7/36

(54) **Mobile communications system**

(71) Applicant: Hewlett-Packard Company, Palo Alto, California 94304 (US)
(72) Inventor: I'Anson, Colin, Frenchay, Bristol BS16 1JL (GB)
(74) Representative: Coker, David Graeme

(57) **Abstract**

A mobile communications system has a base station (12) including a transmitter for communicating to mobile transceivers (14) located within the service area (16) of the base station. Additional receive-only stations (24) are located throughout the service area, and are coupled to the base station by fixed links (26) such as optical fibre or microwave links. A mobile transceiver's signals are received by one or more of the receive-only stations and/or the base station, and communicated to the base station over the fixed links. The size of the service area can be determined primarily by the provision of adequate reception of the base station's transmitted signal; adequate reception of the much lower power signal from a mobile transceiver does not significantly influence the service area size.

## Description

### Technical Field

This invention relates to mobile communications systems, for example of the kind known as cordless or cellular systems.

### Background Art

Various kinds of wireless (e.g. radio) mobile communications systems have been proposed, including cordless telephone systems (principally intended for short-range use within the confines of a building, e.g. CT2 and DECT), and cellular telephone systems (principally intended for longer-range, outdoor use, e.g. GSM). These systems typically provide one or more base stations, each of which is arranged to provide radio communications with portable communications equipment located within a service area (often referred to as a cell) served by that base station. A base station has a radio transmitter and associated transmission antenna, the power and signal propagation characteristics of these being chosen to provide a broadcast radio signal of sufficient strength to be received by mobile transceivers (e.g. car-mounted and hand-held) throughout substantially the whole of that station's service area; the base station also has a radio receiver and receiving antenna (which may be the same physical equipment as the transmission antenna) for reception of signals broadcast by transceivers located within the service area.

Base station transmitters are typically complex and expensive, requiring a substantial investment in acquisition of a site and installation and maintenance of appropriate buildings and equipment. The need to provide an adequate signal for reception by all mobile transceivers throughout the station's service area generally leads to the use of relatively high transmitter powers and elevated antennae, preferably mounted well above ground level, leading to issues of electromagnetic radiation safety and environmental acceptability. The number of possible sites which meet both technical and aesthetic requirements is limited, raising the cost of purchase or lease. Thus operators of mobile communications systems would prefer to minimize the number of base stations.

However, it is also necessary to ensure that a radio signal broadcast by a mobile transceiver located within the service area can be received with adequate signal strength at the base station. The signal power of a mobile transceiver is limited by safety, antenna design and power consumption considerations, so this, together with signal path propagation characteristics and interference between mobile transceivers, constitutes a major constraint on the quality of the received signal at the base station and thus on service area size and the minimum required number of base stations. It is known to provide a base station with multiple reception antennae mounted closely together (i.e. separated by a distance only a few times the radio wavelength in use), and to select whichever antenna or antenna combination is currently providing an optimum signal from a mobile transceiver. However this antenna diversity technique is primarily useful for counteracting multipath signal fading as a transceiver moves, and does not provide any significant increase in service area for a given transceiver power.

It is also known to divide up a base station's service area into several subsidiary areas (commonly known as micro-cells), each served by respective additional base stations containing both transmission and reception equipment. However the provision of this additional base station equipment involves significant, costly investment.

It is an object of this invention to provide a mobile communications system which alleviates constraints on service area size.

### Disclosure of Invention

According to one aspect of this invention there is provided a system for communicating with mobile transceivers, comprising:
at least one base station at a fixed location and including a transmission antenna having characteristics enabling said base station to transmit a wireless signal receivable by mobile transceivers within a predetermined service area, signals intended for mobile transceivers within said service area being transmitted through said transmission antenna exclusively;
a plurality of receivers each including a respective receiving antenna, each disposed at a respective one of a plurality of fixed locations spaced apart within said service area from one another and from said transmission antenna; and
means for collecting wireless signals received by said receivers at a collection point (for example, at the base station).

With such an arrangement several receivers are placed at respective locations spaced throughout the service area of the base station. Accordingly only the relatively high-power transmitted signal from the base station to a mobile transceiver has to traverse the distance between those two pieces of equipment. The much lower power signal from the mobile transceiver need traverse only the path providing the best signal quality among all the possible paths from the transceiver to the receivers or directly to the base station. Therefore the size of a base station's service area can be determined primarily in accordance with the need for satisfactory reception of the base station's transmitted signal by a mobile transceiver located anywhere within the service area. No conflict with desired limitations in the transmission power of the mobile transceiver results; existing relatively low power transceivers can be used throughout a comparatively large service area, without prejudice to quality of service. In addition, relatively costly investment, for example in micro-cell transmitter equipment, is avoided.

### Brief Description of Drawings

A wireless mobile communications system according to this invention in the form of a radio cellular telephone system will now be described by way of example, with reference to the accompanying drawings, in which:
- Figure 1: is a schematic diagram of one cell of a cellular telephone system;
- Figure 2: shows an idealized division of the area covered by the cell of Figure 1 into several sub-areas;
- Figure 3: is a schematic block diagram of a base-station for the cell of Figure 1;
- Figure 4: is a schematic block diagram of a receive-only station for the cell of Figure 1; and
- Figures 5 to 7: show possible channel assignment strategies in the cell of Figure 1.

### Best Mode for Carrying Out the Invention, & Industrial Applicability

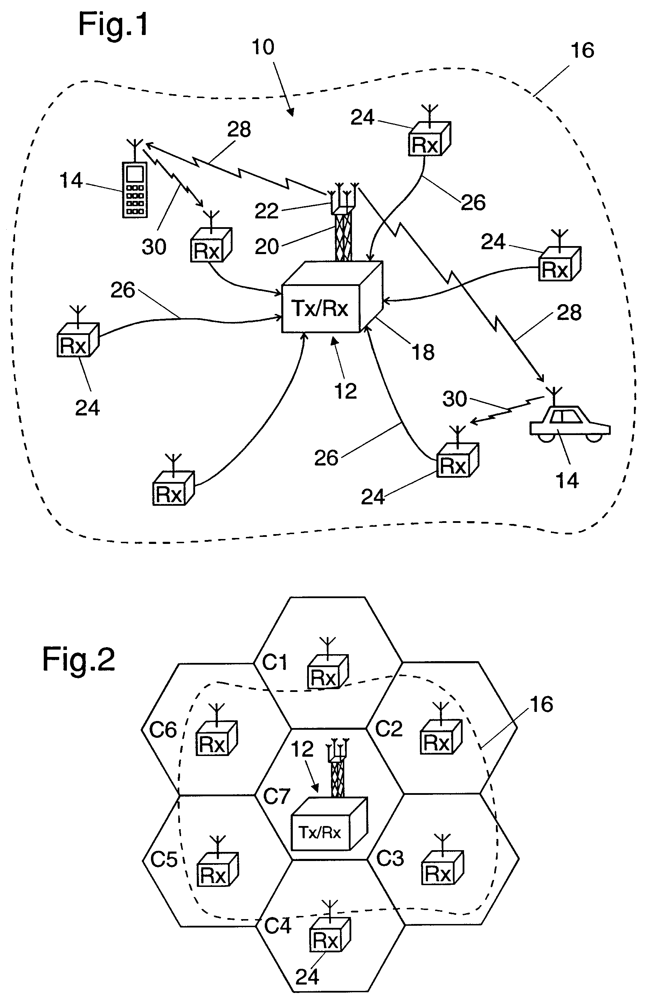

Referring to Figure 1, a cell 10 of a cellular telephone system has a base station 12 for providing communications facilities to mobile transceivers 14 (for example handsets and car-mounted telephones) located within the service area of the cell, indicated by the dashed line 16. The base station includes radio transmitter and receiver equipment housed within a cabin 18, beside which is mounted an antenna mast 20 (typically several metres high) carrying transmitting and receiving antennae 22. The transmitter power and the radiation pattern of the transmitting antennae are arranged to provide adequate signal strength for reception by the mobile transceivers 14 currently within the service area 16.

Additional stations 24 equipped for receiving only are placed at spaced locations around the cell 10, chosen 50 that adequate reception of relatively low-power radio signals transmitted by the mobile transceivers 14 can be obtained throughout the service area 16. The choice of locations can be made, for example, on the basis of the guidance for site selection in known types of communication system provided in *The Cellular Radio Handbook*, by Neil J. Boucher, 1990, Quantum Publishing, Inc., California, USA, pp. 29-56. One possible approach is shown in Figure 2. Referring to Figure 2, the service area 16 is notionally divided into seven hexagonal sub-areas C1 to C7, arranged as six outer sub-areas C1 to C6 located in a ring around a central sub-area C7. The exact hexagonal shape for these sub-areas shown in Figure 2 is idealized, and in practice the actual shape of each sub-area would depend on local factors affecting radio signal propagation, such as topography and building development. A respective receive-only station 24 is situated at an appropriate location within each of the sub-areas C1 to C6 for reception of signals from mobile transceivers within the associated sub-area. Reception for the sub-area C7 is provided by the base station 12.

Other patterns may be used for dividing the service area 16 into sub-areas each containing a receive-only station 24, based for example on three, four or twelve sub-areas.

Referring again to Figure 1, each receive-only station 24 is coupled to the base station 12 via a fixed link 26 such as a land-line (for example optical fibre) or point-to-point microwave radio link.

In operation, the base station 12 assigns transmit and receive radio channels in accordance with known access and duplexing techniques to each mobile transceiver 14 which is currently registered as being within the service area 16, and sends control and user information to the transceivers via radio signals transmitted in the respective channels from the antennae 22 on the mast 20 to the transceivers 14, as indicated at 28.

Information flowing in the opposite direction, from the transceivers 14, is sent via radio signals transmitted in the appropriate channel by each transceiver, and received by whichever of the receive-only stations 24 is currently within range of these signals, as indicated at 30. The stations 24 then forward the received information in analogue or digital form along the fixed links 26 to the base station 12 for appropriate action.

Synchronization of the transceiver transmissions with one another and with the transmissions from the base station 12 is accomplished in known manner, for example by using the base station transmissions to define a reference time base by which operation of the system is coordinated.

Signals transmitted by the base station 12 and the transceivers 14 may be controlled in accordance with any desired kind of multiple access technique for increasing the number of channels carried within the portion of the radio spectrum used within the cell 10. Thus, for example, frequency division multiple access (FDMA), time division multiple access (TDMA) or code division multiple access (CDMA) may be used. Likewise, the modulation techniques employed may be analogue or digital or a combination of these as required.

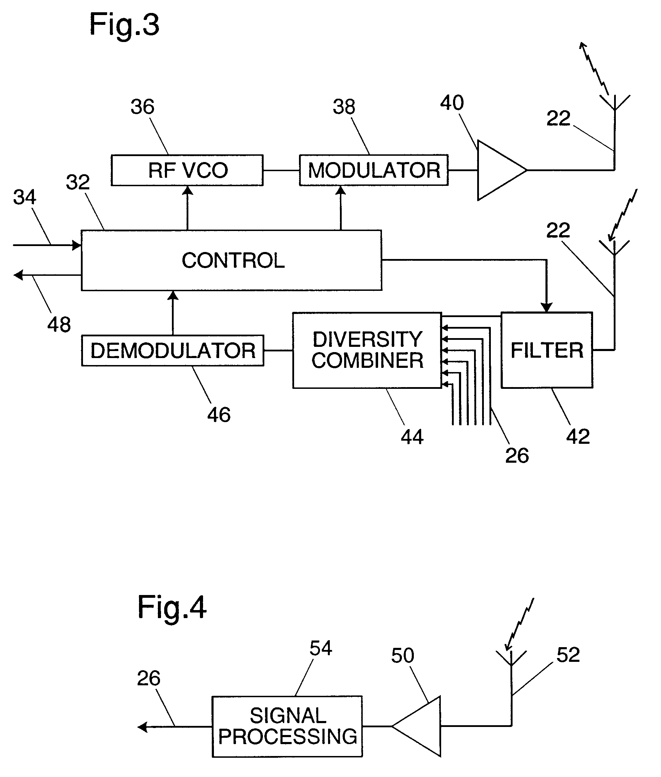

One possible arrangement of the transmitter and receiver equipment in the base station 12, for an analogue FDMA system, is shown in Figure 3. Referring to Figure 3, information to be relayed to mobile transceivers located within the service area 16 is received by a control unit 32 via an input line 34, which may be connected to other base-stations, the public switched telephone network, etc. The control unit 32 operates a radio frequency (r.f.) voltage controlled oscillator 36 and a modulator 38 to produce an r.f. carrier signal modulated to carry the baseband information to be transmitted. The modulated r.f. is supplied via an amplifier 40 to the antennae 22.

Signals arriving from the mobile transceivers 14 at the base station 12 via the antennae 22 are supplied to a filter 42 to reject irrelevant signals, and then to a combiner 44 which also receives signals via the fixed links 26. This combiner monitors signals received via different paths from each of the mobile transceivers 14, and produces a single signal corresponding to each transceiver and containing the information transmitted by that transceiver. Although the physical arrangement of the spaced receive-only stations 24 is significantly different from that of antennae in a diversity receiving system (in that the receive-only stations are placed at well-spaced locations generally throughout the service area 16, rather than being concentrated in close proximity at a single site), the combiner 44 can operate in accordance with the same principles of diversity reception as are used for signals from multiple antennae in diversity receiving systems. Thus, for example, the combiner may select the best signal (e.g. the strongest) from among the signals received from a mobile transceiver 14 via the antenna 22 and/or the receive-only stations 24 and the fixed links 26. Alternatively the combiner 44 may sum two or more of these signals after adjusting them (e.g. in relative phase), to produce a composite signal for the originating transceiver 14; in this case the signals may be summed with equal weights, or with different weights chosen to give an optimal combination.

In the case of a system using binary digital encoding of information, the combiner 44 may operate by, for example, selecting whichever signal has the lowest bit error rate, or may generate an output bit stream in which each bit has the value indicated by the corresponding bits in a majority of signals received via different paths from a given transceiver.

The signal output from the combiner 44 for each mobile transceiver 14 is passed to a demodulator 46 for extraction of the information contained in the signal, and this information is supplied by the base station 12 on an output line 48.

Referring to Figure 4, each receive-only station 24 comprises an r.f. amplifier 50 having its input coupled to the station's antenna 52 and its output coupled to a signal processor 54, which is in turn connected to the fixed link 26. Depending on the nature of the signal sent along this fixed link, the processor 54 may apply one or more of a variety of signal processing techniques to the received signal, as discussed below. The receive-only station 24 can typically be made very compact and with low power requirements, facilitating installation in a wide range of situations without requiring special facilities. Because the station 24 has no provision for transmission, there is no need for it to be tested for conformance with regulations controlling r.f. transmission equipment. These attributes assist in enabling the receive-only stations 24 to be provided at relatively low cost.

The signals provided by the processor 54 in a receive-only station 24 to the fixed link 26 may be derived from the received r.f. signal by any desired processing technique, applied to any desired extent. Thus, for example, the received r.f. signal may be simply transferred to the fixed link 26 as received, for demodulation and decoding at the base station 12. Another possibility is for the carrier frequency of the received signal to be changed from the received radio frequency to some lower, intermediate frequency (i.f.); the resulting i.f. signal is then transferred over the fixed link 26. A further option is for the received signal to be demodulated in the processor 54 to recover the baseband signal (e.g. several analogue or digital information channels combined by TDMA), which signal is then transferred to the base station 12 over the fixed link. In another possible arrangement such a baseband signal is decomposed into its constituent individual information channels, which are then supplied to the base station 12 via the fixed link 26. In each case the processor 54 applies any necessary signal treatment and conversion, such as from electrical to optical form if the fixed link 26 is an optical fibre.

The base station 12 and the receive-only stations 24 may each independently incorporate conventional diversity reception techniques, for example to counteract multipath signal fading affecting an individual station as a transceiver moves.

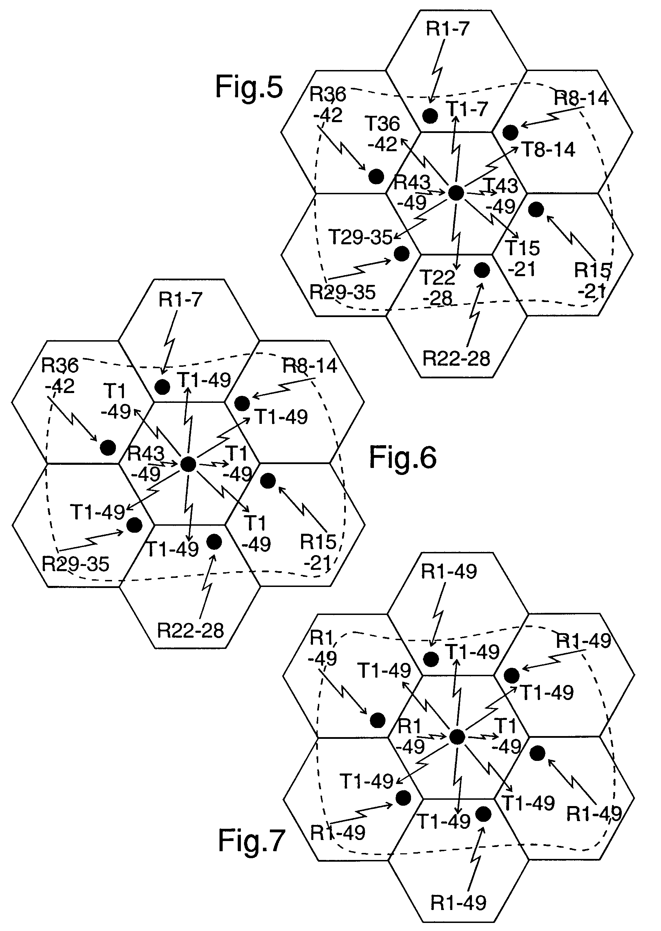

The base station 12 will typically have available to it several radio frequencies. Each transmit or receive channel requires one of these frequencies, either continuously while a channel is in use, or multiplexed among several channels by time (TDMA) or by code (CDMA). These channels may be assigned by the base station 12 between the different sub-areas and their associated receive-only stations 24 according to any one of several different patterns, some of which are shown in Figures 5 to 7. It is assumed in each case that a total of forty-nine transmit channels T1 to T49 and forty-nine receive channels R1 to R49 are available for use in the service area 16. In the pattern shown in Figure 5 each receive-only station 24 can use any receive channel in a respective group of seven channels R1-R7, R8-R14, etc. assigned to that station, and the base station 12 uses its own respective group of receive channels R43-R49; the base station 12 transmits to a sub-area using a channel in a respective group of seven channels T1-T7, T8-T14, ..., T43-T49, the group from which a channel is chosen for transmission to any particular mobile transceiver 14 depending on the sub-area in which the transceiver 14 is currently located.

In the pattern shown in Figure 6, each receive-only station 24 and the base station 12 use respective groups of channels R1-R7, R8-R14, ..., R43-R49 as in the arrangement of Figure 5; however, the base station 12 transmits using any of the channels T1-T49 irrespective of the location of the mobile transceiver intended to receive the signal.

Likewise, any available transmit channel is used in the pattern shown in Figure 7, and in addition any of the receive channels R1-R49 is used throughout the service area 16.

## Claims

1. A system for communicating with mobile transceivers, comprising:
at least one base station (18) at a fixed location and including a transmission antenna (22) having characteristics enabling said base station to transmit a wireless signal receivable by mobile transceivers within a predetermined service area (16), signals intended for mobile transceivers within said service area being transmitted through said transmission antenna exclusively;
a plurality of receivers (24) each including a respective receiving antenna, each disposed at a respective one of a plurality of fixed locations spaced apart within said service area from one another and from said transmission antenna; and
means (26) for collecting wireless signals received by said receivers at a collection point.

2. The system of claim 1, wherein said locations are spaced apart substantially uniformly within said service area.

3. The system of claim 1 or claim 2, wherein said collection point comprises said base station.

4. The system of any one of the preceding claims, wherein signals received by said receivers are communicated to said collection point as radio frequency analogue signals.

5. The system of any one of claims 1 to 3, wherein signals received by said receivers at a radio frequency are converted to signals at a frequency intermediate said radio frequency and baseband frequency, and are communicated to said collection point as analogue signals at said intermediate frequency.

6. The system of any one of claims 1 to 3, wherein signals received by said receivers are communicated to said collection point as baseband analogue signals.

7. The system of any one of claims 1 to 3, wherein signals received by said receivers are demodulated to extract digital data carried by the signals, and said data are communicated to said collection point in digital form.

8. The system of claim 7, wherein said signals received by said receivers comprise signals in time division multiplexed form containing data for a plurality of communication channels, and said data are communicated to said collection point in said multiplexed form.

9. The system of any one of the preceding claims, wherein signals received at said collection point via different receivers from a single transceiver are processed using diversity processing.

10. The system of any one of the preceding claims, wherein a first frequency is used by said base station for transmission and at least one other frequency is used for reception by said receivers.

11. The system of any one of the preceding claims, wherein respective ones of said receivers use respective and different frequencies for reception.
